# EUROPÄISCHE PATENTANMELDUNG

(11) **EP 1 868 116 A1**
(43) Veröffentlichungstag der Anmeldung: **19.12.2007**
(21) Anmeldenummer: 06012313.0
(22) Anmeldetag: 14.06.2006
(51) Int. Cl.: G06F 17/30

(54) **Vorrichtung zur Erzeugung eines Adressbuchs**

(71) Anmelder: Vodafone Holding GmbH, 40213 Düsseldorf (DE)
(72) Erfinder: Klemens Gaida Dr., 40123 Düsseldorg (DE); Neill Cameron, 06902 Sophia- Antipolis (FR)
(74) Vertreter: Weisbrodt, Bernd

(57) **Zusammenfassung**

Die vorliegende Erfindung betrifft eine Vorrichtung (19) zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs (39), mit einer Schnittstelle zu wenigstens einer wenigstens einen Kommunikationsdienst eines Kommunikationsnetzwerks anbietenden und eine zur Nutzung des wenigstens einen Kommunikationsdienstes des Kommunikationsnetzwerks geeignete Datenbank (21, 22, 23, 24, 25) mit Adressierungsinformationen wenigstens eines Kommunikationspartners aufweisenden Kommunikationseinrichtung, einer Einrichtung (27, 28, 29, 30, 31) zum Extrahieren von Kontaktierungsinformationen aus der Adressierungsinformationen aufweisenden Datenbank (21, 22, 23, 24, 25), einer Einrichtung (33, 34, 35, 36, 37) zum Konvertieren von extrahierten Kontaktierungsinformationen in Kontaktierungsinformationen eines einheitlich vorgebbaren Formats, einer Vergleichs- und/oder Zuordnungseinrichtung zum Zusammenstellen von konvertierten Kontaktierungsinformationen zu einem Adressbuch (39), einer Schnittstelle zu wenigstens einer über ein Kommunikationsnetzwerk zugänglichen, Informationen von zu Kommunikationszwecken über wenigstens ein Kommunikationsnetzwerk erreichbaren Kommunikationspartnern aufweisenden Datenbank (26) über wenigstens eine Kommunikationseinrichtung zur Nutzung wenigstens eines Kommunikationsdienstes eines Kommunikationsnetzwerks und einer Einrichtung (32, 38) zum Verifizieren und/oder Vervollständigen von Kontaktierungsinformationen des Adressbuchs (39) durch wenigstens einen Vergleich mit Informationen der über ein Kommunikationsnetzwerk zugänglichen Datenbank (26).

Ferner betrifft die vorliegende Erfindung den Betrieb einer erfindungsgemäßen Vorrichtung mit und/oder im Zusammenhang mit einer Benutzerschnittstelle (Browser, 8) mit graphischer Benutzeroberfläche, sogenannte GUI (Graphical User Interface) zum Aufrufen, Darstellen und/oder Verwalten von Dateien, den Betrieb seitens eines Rechners, welcher wenigstens eine Kommunikationseinrichtung zum Zugriff auf ein Kommunikationsdienste bereitstellendes Kommunikations-netzwerk aufweist, und/oder den Betrieb seitens eines in einem Mobilfunknetz betreibbaren Endgerätes.

## Beschreibung

Die vorliegende Erfindung betrifft eine Vorrichtung zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs.

Ferner betrifft die vorliegende Erfindung den Betrieb einer erfindungsgemäßen Vorrichtung mit und/oder im Zusammenhang mit einer Benutzerschnittstelle mit graphischer Benutzeroberfläche, sogenannte GUI (Graphical User Interface) zum Aufrufen, Darstellen und/oder Verwalten von Dateien, den Betrieb seitens eines Rechners, welcher wenigstens eine Kommunikationseinrichtung zum Zugriff auf ein Kommunikationsdienste bereitstellendes Kommunikations-netzwerk aufweist, und/oder den Betrieb seitens eines in einem Mobilfunknetz betreibbaren Endgerätes.

Im Stand der Technik sind Adressbücher mit Informationen zur Kontaktierung von zu Kommunikationszwecken über wenigstens ein Kommunikationsnetzwerk erreichbaren Kommunikationspartnern in verschiedenen Ausgestaltungen und für unterschiedlichste Anwendungen bekannt. So werden entsprechende Adressbücher beispielsweise von seitens eines Rechners ausgeführten Programmen zur Nutzung von Kommunikationsdiensten wie E-Mail-Diensten seitens eines Kommunikationsnetzwerk wie dem Internet genutzt und dienen dabei insbesondere zur Verwaltung von E-Mail-Adressen von Kommunikationspartnern. Ferner werden entsprechende Adressbücher beispielsweise seitens in Mobilfunknetzen betreibbarer Endgeräte, insbesondere Mobilfunktelefonen, zur Verwaltung von Rufnummern, insbesondere sogenannten MSISDNs (MSISDN: Mobile Subscriber ISDN; ISDN: Integrated Services Digital Network), von Kommunikationspartnern aufweist.

Im Bereich von Kommunikationsdiensten von Kommunikationsnetzwerken werden deren Nutzungen immer umfangreicher, insbesondere da kommunikationsnetzseitig immer mehr netzübergreifende Dienste bereitgehalten beziehungsweise angeboten werden. Die Nutzung von netzübergreifenden Kommunikationsdiensten bedingt dementsprechend eine Nutzung verschiedenerer Adressbücher mit Kontaktinformationen von Kommunikationspartnern entsprechend den jeweilig zu nutzenden Kommunikationsdiensten.

Neben der Notwendigkeit der Führung von Adressbüchern mit Kontaktinformationen von Kommunikationspartnern für die jeweiligen Kommunikationsdienste und Kommunikationsnetze ist es in der Anwendung nachteilig, dass für bestimmte Kommunikationspartner mitunter nicht für die zur Nutzung zur Verfügung stehenden jeweiligen Kommunikationsdienste und Kommunikationsnetzwerke die entsprechenden Kontaktinformationen vorhanden sind, wodurch die Nutzung, insbesondere von netzübergreifenden Kommunikationsdiensten eingeschränkt.

Der vorliegenden Erfindung liegt in Anbetracht dieses Standes der Technik die Aufgabe zugrunde, eine Vorrichtung zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs bereitzustellen, welche unter Meidung der beschriebenen Nachteile eine verbesserte und umfangreichere Nutzung von Kommunikationsdiensten eines Kommunikationsnetzwerks ermöglicht, insbesondere hinsichtlich netzübergreifender Kommunikationsdienste.

Zur technischen Lösung wird mit der vorliegenden Erfindung eine Vorrichtung zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs, mit einer Schnittstelle zu wenigstens einer wenigstens einen Kommunikationsdienst eines Kommunikationsnetzwerks anbietenden und eine zur Nutzung des wenigstens einen Kommunikationsdienstes des Kommunikationsnetzwerks geeignete Datenbank mit Adressierungsinformationen wenigstens eines Kommunikationspartners aufweisenden Kommunikationseinrichtung, einer Einrichtung zum Extrahieren von Kontaktierungsinformationen aus der Adressierungsinformationen aufweisenden Datenbank, einer Einrichtung zum Konvertieren von extrahierten Kontaktierungsinformationen in Kontaktierungsinformationen eines einheitlich vorgebbaren Formats, einer Vergleichs- und/oder Zuordnungseinrichtung zum Zusammenstellen von konvertierten Kontaktierungsinformationen zu einem Adressbuch, einer Schnittstelle zu wenigstens einer über ein Kommunikationsnetzwerk zugänglichen, Informationen von zu Kommunikationszwecken über wenigstens ein Kommunikationsnetzwerk erreichbaren Kommunikationspartnern aufweisenden Datenbank über wenigstens eine Kommunikationseinrichtung zur Nutzung wenigstens eines Kommunikationsdienstes eines Kommunikationsnetzwerks und einer Einrichtung zum Verifizieren und/oder Vervollständigen von Kontaktierungsinformationen des Adressbuchs durch wenigstens einen Vergleich mit Informationen der über ein Kommunikationsnetzwerk zugänglichen Datenbank bereitgestellt.

Die Erfindung macht sich die Erkenntnis zu Nutze, dass eine verbesserte und umfangreichere Nutzung von Kommunikationsdiensten eines Kommunikationsnetzwerks, insbesondere hinsichtlich netzübergreifender Kommunikationsdienste, ermöglicht wird, wenn im Rahmen der Erzeugung eines Adressbuchs Kontaktierungsinformationen in ein einheitliches Format verbracht werden und zu Kommunikationszwecken mit Kommunikationsdiensten von Kommunikationsnetzwerken entsprechend den dazu gegebenen Formaten nutzbar sind.

Durch die vorteilhafte Möglichkeit eines Zugangs über einen Kommunikationsdienst eines Kommunikationsnetzwerks zu einer Datenbank mit Informationen von zu Kommunikationszwecken über wenigstens ein Kommunikationsnetzwerk erreichbaren Kommunikationspartnern lassen sich vorteilhafterweise automatisiert fehlende und/oder unbekannte Kontaktierungsinformationen von Kommunikationspartnern beschaffen und in das Adressbuch aufnehmen oder aber verifizieren und/oder vervollständigen. Vorteilhafterweise wird die Datenbank eine von einem Drittanbieter unterhalten und betrieben. Besonders bevorzugt ist die Nutzung und Einbindung einer öffentlich zugänglichen Datenbank. Vorteilhafterweise ist die erfindungsgemäße Nutzung der Datenbank und deren Auswahl von dem Nutzer einstellbar.

Vorteilhafterweise erfolgt die Zusammenstellung von konvertierten Kontaktierungsinformationen zu einem Adressbuch nach vorzugsweise vorgebbaren übereinstimmenden Merkmalen. Übereinstimmende Merkmale von Kontaktinformationen können dabei vorteilhafterweise Namen, Vornamen, Anschriften, Kontaktzeiten, Kontaktarten, Adressierungsinformationen, und/oder persönliche Informationen der beziehungsweise über die Kommunikationspartner, wie Geburtstage, Vorlieben und/oder dergleichen, sein.

Eine weitere vorteilhafte Ausgestaltung der Erfindung ist gekennzeichnet durch eine Einrichtung zur automatischen Extrahierung und/oder Konvertierung von Kontaktierungsinformationen aus von und/oder mittels der wenigstens einen Kommunikationseinrichtung für Kommunikationsdienste eines Kommunikationsnetzwerks genutzten Adressierungsinformationen von Kommunikationspartnern. Als Adressierungsinformationen von Kommunikationspartnern werden dabei vorteilhafterweise E-Mail-Adressen, Internetadressen (URL), Rufnummern (ISDN) und/oder Mobilfunknetzrufnummern (MSISDN) genutzt. Insgesamt ist so eine weitere Verbesserung in der Nutzung und Handhabbarkeit einer erfindungsgemäßen Vorrichtung sowie damit erzeugter Adressbücher erzielbar.

Eine weitere vorteilhafte Ausgestaltung der Erfindung sieht vor, dass die über ein Kommunikationsnetzwerk zugängliche Datenbank Informationen zu Kosten von genutzten Kommunikationsdiensten des Kommunikationsnetzwerks aufweist oder zugänglich macht, wobei die Informationen vorzugsweise in Form von Abrechnungsdaten (CDR) der genutzten Kommunikationsdienste des Kommunikationsnetzwerks vorliegen. Erfindungsgemäß wird so im Rahmen der Nutzung eines erfindungsgemäß erzeugten Adressbuchs dem jeweiligen nutzer die Möglichkeit einer Nachvollziehbarkeit von Kosten für Kommunikationsdienste zur Verfügung gestellt, insbesondere hinsichtlich Kostenanalysen zur Kostenkontrolle und/oder dergleichen Managementanwendungen.

Eine weitere vorteilhafte Ausgestaltung der Erfindung sieht vor, dass die über ein Kommunikationsnetzwerk zugängliche Datenbank Informationen zu geographischen Aufenthaltsorten von Kommunikationspartner aufweist, insbesondere hinsichtlich deren Anschriften an Wohn- und/oder Unternehmenssitzen. Vorteilhafterweise ist dabei über einen Kommunikationsdienst des Kommunikationsnetzwerks eine Beschreibung des Weges zu dem Sitz des Kommunikationspartners im Form einer sogenannten Routenplanung integrierbar und wiedergebbar. In einer besonders bevorzugten Ausgestaltung der Erfindung wird dabei der aktuelle Aufenthaltsort des Nutzers des Adressbuchs vorteilhafterweise automatisch berücksichtigt. Die Berücksichtigung des aktuelle Aufenthaltsort des Nutzers des Adressbuchs erfolgt dabei vorteilhafterweise unter Nutzung wenigstens einer Information über das von dem Nutzer genutzte Kommunikationsnetzwerk, im Falle eines Mobilfunknetzes als Kommunikationsnetzwerk besonders bevorzugt anhand der Funkzelle in der sich der Nutzer aufhält.

Eine besonders vorteilhafte Ausgestaltung der Erfindung ist gekennzeichnet durch eine Einrichtung zur automatischen Erfassung und/oder Extrahierung von Kontaktierungsinformationen aus mittels der wenigstens einen Kommunikationseinrichtung für Kommunikationsdienste eines Kommunikationsnetzwerks genutzten und/oder erfassten Adressierungsinformationen von Kommunikationspartnern in Abhängigkeit von vorgebbaren Ereignissen und/oder Inhalten. Erfindungsgemäß werden entsprechende Informationen so automatisch im Rahmen oder anhand der Nutzung von Kommunikationsdiensten bestimmt, besonders bevorzugt durch Analyse und Auswertung von Nachrichten entsprechender Kommunikationsdienste. Dadurch wird die Nutzung einer erfindungsgemäßen Vorrichtung zur eines Adressbuchs und dessen Anwendung weiter verbessert, insbesondere durch die vorteilhafterweise dem Nutzer zur Verfügung gestellte Möglichkeit einer Vorgabe der auszuwertenden Ereignisse und/oder Inhalte einer Kommunikation.

In einer weiteren Ausgestaltung der Erfindung weist die erfindungsgemäße Vorrichtung eine Einrichtung zur Speicherung des Adressbuchs seitens wenigstens einer Datenbank auf. Vorteilhafterweise wird die Datenbank dabei über einen Kommunikationsdienst eines Kommunikationsnetzwerks eingerichtet und bereitgehalten. Erfindungsgemäß ist so eine weitere Verbesserung im Nutzungsumfang von Kommunikationsdiensten eines Kommunikationsnetzwerks ermöglicht.

Eine weitere besonders vorteilhafte Ausgestaltung der Erfindung ist gekennzeichnet durch eine Einrichtung zur Sortierung und/oder Gewichtung von Kontaktierungsinformationen des Adressbuchs, vorzugsweise in Abhängigkeit von nutzerindividuellen Vorgaben, nutzerindividuellen Auswertungen, Ereignissen und/oder Inhalten. Dadurch wird dem Nutzer einer erfindungsgemäßen Vorrichtung zur Erzeugung eines Adressbuchs ein weitere Verbesserung hinsichtlich der Nutzungsmöglichkeiten bereitgestellt.

Eine weitere vorteilhafte Ausgestaltung der Erfindung ist gekennzeichnet durch einen Betrieb einer erfindungsgemäßen Vorrichtung mit und/oder im Zusammenhang mit einer Benutzerschnittstelle mit graphischer Benutzeroberfläche (GUI) zum Aufrufen, Darstellen und/oder Verwalten von Dateien. Eine bevorzugte Ausgestaltung einer erfindungsgemäßen Benutzerschnittstelle ist zum Aufrufen, Darstellen und/oder Verwalten von Dateien ausgebildet, vorzugsweise nach Art eines sogenannten Browsers. Eine entsprechende Benutzerschnittstelle eines Browsers ist beispielsweise seitens der EP 0 843 269 B1 beschrieben. Eine bevorzugte Ausgestaltung der Erfindung betrifft eine Benutzerschnittstelle mit graphischer Benutzeroberfläche (GUI) zum Aufrufen, Darstellen und/oder Verwalten von Dateien, bei welcher eine erfindungsgemäße Vorrichtung zur Erzeugung eines Adressbuchs integrativer Bestandteil derselben ist.

Eine weitere besonders vorteilhafte Ausgestaltung der Erfindung ist gekennzeichnet durch einen Betrieb seitens eines in einem Mobilfunknetz, vorzugsweise gemäß dem GSM- und/oder UMTS-Funknetzstandard, betreibbaren Endgerätes, vorzugsweise mobilen Endgerätes, besonders bevorzugt in Form eines Mobilfunktelefons.

Gegenstand der vorliegenden Erfindung ist dabei vorteilhafterweise ferner ein Verfahren zum Betreiben einer zum Aufrufen, Darstellen und/oder Verwalten von Dateien ausgebildeten Benutzerschnittstelle (Browser) mit graphischer Benutzeroberfläche (GUI) seitens eines Rechners, welcher Mittel zum Zugriff auf ein Dateien bereitstellendes Kommunikationsnetzwerk (Internet) aufweist, wobei die Benutzerschnittstelle (Browser) über eine Kommunikationsverbindung mit dem Kommunikationsnetzwerk (Internet) einen Zugriff auf seitens eines Kommunikationsnetzwerks (Internet) bereitgestellte Dateien unter Nutzung wenigstens einer Adressierungsinformation (URL) einer Datei im Kommunikationsnetzwerk (Internet) ermöglicht und die Benutzerschnittstelle (Browser) über ein Eingabemittel des Rechners zumindest teilweise auswählbare und/oder aktivierbare Felder zur Eingabe, Ausgabe und/oder Steuerung des Aufrufs, der Darstellung und/oder der Verwaltung von Dateien und/oder Adressierungsinformationen (URLs) erzeugt, die seitens der graphischen Benutzeroberfläche (GUI) der Benutzerschnittstelle (Browser) wiedergegeben werden, welches dadurch gekennzeichnet ist, dass wenigstens eine Information zur Kontaktierung von wenigstens einem in einem Mobilfunknetzwerk betreibbaren Endgerät mittels wenigstens eines Kommunikationsdienstes eines Mobilfunknetzwerks erfasst wird und die wenigstens eine erfasste Kontaktierungsinformation seitens eines von der der Benutzerschnittstelle (Browser) erzeugten Feldes der graphischen Benutzeroberfläche (GUI) der Benutzerschnittstelle (Browser) wiedergegeben wird.

Vorteilhafterweise wird die wenigstens eine Kontaktierungsinformation automatisch aus Kommunikationsverbindungen der Benutzerschnittstelle (Browser) mit dem Kommunikationsnetzwerk und/oder aus Kommunikationsverbindungen von seitens der Benutzerschnittstelle (Browser) genutzten und/oder nutzbaren Anwendungen mit dem Kommunikationsnetzwerk extrahiert und erfasst, vorzugsweise im Rahmen von E-Mail-Adressen, Internetadressen (URL), Rufnummern (ISDN) und/oder Mobilfunknetzrufnummern (MSISDN) nutzenden Kommunikationsverbindungen der Benutzerschnittstelle (Browser).

Eine weitere Ausgestaltung sieht vor, dass die wenigstens eine erfasste Kontaktierungsinformation seitens einer Datenbank der Benutzerschnittstelle (Browser) gespeichert wird und seitens des von der der Benutzerschnittstelle (Browser) erzeugten Feldes der graphischen Benutzeroberfläche (GUI) der Benutzerschnittstelle (Browser) die wenigstens eine gespeicherte Kontaktierungsinformation wiedergegeben wird.

Vorteilhafterweise werden erfasste und/oder gespeicherte Kontaktierungsinformationen seitens des von der der Benutzerschnittstelle (Browser) erzeugten Feldes der graphischen Benutzeroberfläche (GUI) der Benutzerschnittstelle (Browser) sortiert und/oder gewichtet wiedergegeben. Die Sortierung und/oder Gewichtung erfolgt bevorzugt in Abhängigkeit von nutzerindividuellen Vorgaben, nutzerindividuellen Auswertungen, Ereignissen und/oder Inhalten.

Die wenigstens eine Kontaktierungsinformation wird vorteilhafterweise bei über ein Eingabemittel des Rechners erfolgender Anwahl des Feldes für eine Kommunikation mit dem in einem Mobilfunknetzwerk betreibbaren Endgerät mittels des wenigstens einen Kommunikationsdienstes des Mobilfunknetzwerks genutzt.

Eine weitere Ausgestaltung der Erfindung ist gekennzeichnet durch einen Betrieb seitens eines Rechners, welcher wenigstens eine Kommunikationseinrichtung zum Zugriff auf ein Kommunikationsdienste bereitstellendes Kommunikationsnetzwerk aufweist. Eine besonders bevorzugte Ausgestaltung der Erfindung ist dadurch gekennzeichnet, dass der Rechner ein in einem Mobilfunknetz betreibbares, vorzugsweise mobiles Endgerät, vorzugsweise in Form eines Mobilfunktelefons, ist und/oder nutzt. Vorteilhafterweise ist dabei die Kommunikationsverbindung eine Mobilfunknetzverbindung, vorzugsweise in einem Mobilfunknetz gemäß einem GSM-, UMTS- und/oder GPRS-Funknetzstandard (GSM: Global System for mobile Communications; UMTS: Universal Mobile Telecommunications System; GPRS: General Packet Radio Service).

Weitere Einzelheiten, Merkmale und Vorteile der Erfindung werden nachfolgend anhand des in der Figur der Zeichnung dargestellten Ausführungsbeispiels näher erläutert. Dabei zeigt:

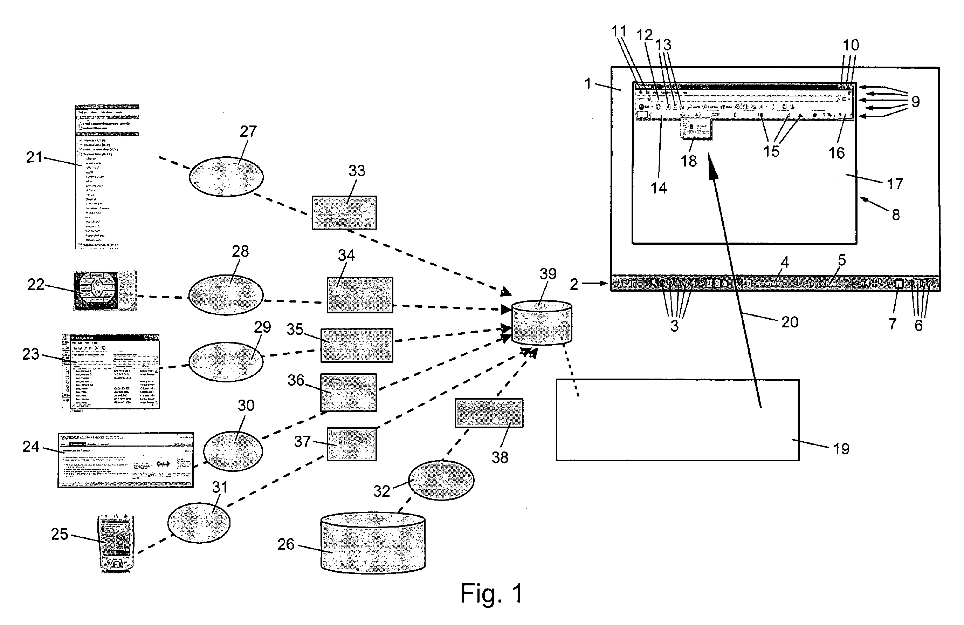

- Fig. 1: in einer schematischen Prinzipdarstellung ein Ausführungsbeispiel eines Betriebs einer erfindungsgemäßen Vorrichtung mit und/oder im Zusammenhang mit einer Benutzerschnittstelle mit graphischer Benutzeroberfläche zum Aufrufen, Darstellen und/oder Verwalten von Dateien.

Fig. 1 zeigt eine graphische Benutzeroberfläche 1 einer Benutzerschnittstelle eines auf einem Rechner ausgeführten Betriebssystems. Die graphische Benutzeroberfläche wird dabei seitens einer Anzeigeeinrichtung des Rechners wiedergegeben. In einem unteren Bereich der graphischen Benutzeroberfläche sind dabei in einer Funktionsleiste 2 Schalt- und/oder Funktionsflächen 3, 4, 5, 6 und 7 vorhanden, welche zur Steuerung von Funktionalitäten und/oder Anwendungsprogrammen mittels der graphischen Benutzeroberfläche der Benutzerschnittstelle des Betriebssystems dienen.

Die Schaltflächen 3, 6 und 7 sind als auswählbare und/oder aktivierbare Felder ausgebildet, die bei Betätigung über ein Eingabemittel des Rechners, insbesondere einem graphischen Eingabemittel in Form einer sogenannten Maus, entsprechende Anwendungsprogramme und/oder Funktionalitäten derselben aufrufen und seitens der graphischen Benutzeroberfläche wiedergeben.

Die Schalt- und/oder Funktionsflächen 4 und 5 sind als über ein Eingabemittel des Rechners auswählbare Felder ausgebildet. Dabei signalisieren die in der Funktionsleiste 2 wiedergegebenen Felder der Schalt- und/oder Funktionsflächen 4 und 5 in der Funktionsleiste die Ausführung eines entsprechenden Anwendungsprogramms seitens der graphischen Benutzeroberfläche 1 der Benutzerschnittstelle des Betriebssystems. Bei Betätigung der Felder der Schalt- und/oder Funktionsflächen 4 oder 5 durch Auswahl über ein Eingabemittel des Rechners wird dieses dabei als das jeweils aktiv genutzte Anwendungsprogramm in Form eines sogenannten Fensters seitens der graphischen Benutzeroberfläche 1 der Benutzerschnittstelle des Betriebssystems wiedergegeben. Vorliegend wird das über die Schalt- und/oder Funktionsfläche 5 in der Funktionsleiste 2 dargestellte Anwendungsprogramm, vorliegend eine Benutzerschnittstelle mit graphischer Benutzeroberfläche 8 zum Aufrufen, Darstellen und/oder Verwalten von Dateien in einem Fenster 8 aktiv ausgeführt.

Bei der Benutzerschnittstelle mit graphischer Benutzeroberfläche 8 zum Aufrufen, Darstellen und/oder Verwalten von Dateien handelt es sich dabei um einen sogenannten Browser, welcher über eine Kommunikationsverbindung mit dem Internet als Kommunikationsnetzwerk einen Zugriff auf seitens des Internets bereitgestellte Dateien und deren Inhalte ermöglicht. Die Benutzerschnittstelle mit graphischer Benutzeroberfläche 8 zum Aufrufen, Darstellen und/oder Verwalten von Dateien ist dabei als Anwendungsprogramm seitens der graphischen Benutzeroberfläche 1 der Benutzerschnittstellte des Betriebssystems seitens des Rechners ausgeführt. Dabei sind in einem oberen Bereich der graphischen Benutzeroberfläche 8 Funktionsleisten 9 vorgesehen, die verschiedene Schalt-, Funktions- und/oder Eingabeflächen 10, 11, 12, 13, 14, 15, 16 und 18 in Form von zumindest teilweise auswählbaren und/oder aktivierbaren Feldern zur Eingabe, Ausgabe und/oder Steuerung des Aufrufs, der Darstellung und/oder der Verwaltung von Dateien, Adressierungsinformationen und/oder Kontaktierungsinformationen von Kommunikationspartnern aufweisen. Mittels der Adressierungsinformationen und/oder Kontaktierungsinformationen von Kommunikationspartnern wird dabei über eine Kommunikationsverbindung mit einem Kommunikationsnetzwerk, beispielsweise dem Internet oder einem Mobilfunknetz gemäß dem GSM- und/oder UMTS-Funknetzstandard ein Zugriff auf seitens eines Kommunikationsnetzwerks, vorzugsweise dem Internet, bereitgestellte Dateien oder ein Zugriff auf das Mobilfunknetz zu Kommunikationszwecken mit Kommunikationspartnern ermöglicht. Im Zusammenhang mit dem Internet als Kommunikationsnetzwerk werden als Adressierungsinformationen vorliegend einheitliche Ortsangeber für Ressourcen, sogenannte URLs (URL: Uniform Resource Locator), verwendet. Entsprechende Adressierungsinformationen sind seitens der graphischen Benutzeroberfläche 8 seitens der Eingabefläche 12 mittels einer Eingabeeinrichtung des Rechners, in der Regel einer Tastatur, eingebbar.

Die in der Funktionsleiste 9 der graphischen Benutzeroberfläche 8 der Benutzerschnittstelle wiedergegebenen Schaltflächen 10 dienen zur Beeinflussung der Wiedergabe der graphischen Benutzerschnittstelle 8 seitens der Benutzerschnittstelle 1 des Betriebssystems und erlauben zum einen ein Maximieren beziehungsweise Minimieren des Fensters der graphischen Benutzeroberfläche 8 und/oder ein Beenden der Benutzerschnittstelle (Browser).

Die Schaltflächen 13 in der Funktionsleiste 9 der graphischen Benutzeroberfläche 8 der Benutzerschnittstelle zum Aufrufen, Darstellen und/oder Verwalten von Dateien sind als aktivierbare Felder zur Ausführung verschiedener Funktionalitäten und/oder Anwendungen mittels der Benutzerschnittstelle zum Aufrufen, Darstellen und/oder Verwalten von Dateien, welche seitens des Anzeigebereichs 17 der graphischen Benutzeroberfläche 8 der Benutzerschnittstelle wiedergegeben werden.

Die weiter in den Funktionsleisten 9 der graphischen Benutzeroberfläche 8 vorhandenen Schaltflächen 15 sind als auswählbare und/oder aktivierbare Felder zum Aufruf von weitergehenden Anwendungen und/oder Nutzungen der Benutzerschnittstelle mit graphischer Benutzeroberfläche 8 zum Aufrufen, Darstellen und/oder Verwalten von Dateien ausgebildet.

Kontaktierungsinformationen von Kommunikationspartnern werden vorliegend seitens der Schalt- und/oder Funktionsfläche 18 wiedergegeben. Die Schalt- und/oder Funktionsfläche 18 werden dabei von einer erfindungsgemäßen Vorrichtung 19 zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs 39 erzeugt und seitens der graphischen Benutzeroberfläche 8 wiedergegeben. Die Vorrichtung 39 weist dazu eine Schnittstelle zur graphischen Benutzeroberfläche 8 auf, welche in Fig. 1 symbolisch durch den mit der Bezugsziffer 20 gekennzeichneten Pfeil dargestellt ist.

Das von der Vorrichtung 19 erfindungsgemäß erzeugte Adressbuch 39 umfasst von verschiedenen Datenbanken 21, 22, 23, 24, und 25 erfasste Adressierungsinformationen.

Die Datenbank 21 ist Bestandteil eines seitens des Rechners ausgeführten Anwendungsprogramms, vorliegend einem sogenannten Instant Messengers und umfasst neben Adressierungsinformationen Kontaktierungsinformationen von Kommunikationspartnern des Nutzers des Anwendungsprogramms. Die Kontaktierungsinformationen liegen dabei in dem beziehungsweise den von dem Anwendungsprogramm (Instant Messenger) verwendeten oder genutzten Format beziehungsweise Formaten vor.

Die Datenbank 22 ist seitens eines mobilen Endgerätes beziehungsweise seitens eines von diesem zum Betrieb in einem Mobilfunknetz genutzten Mobilfunkteilnehmer-identifikationsmoduls, einer sogenannten SIM (SIM: Subscriber Identity Module) oder USIM (USIM: Universal Subscriber Identity Module) eingerichtet und umfasst insbesondere Rufnummern, sogenannte MSISDNs, von Kommunikationspartnern des Nutzers des mobilen Endgerätes oder der USIM beziehungsweise der SIM. Die Kontaktierungsinformationen, also die MSISDNs liegen dabei in dem beziehungsweise den von dem mobilen Endgerät oder der USIM beziehungsweise der SIM verwendeten oder genutzten Format beziehungsweise Formaten vor.

Die Datenbank 23 ist ebenfalls Bestandteil eines seitens des Rechners ausgeführten Anwendungsprogramms, vorliegend einem zur Verwaltung von zu sendenden, empfangenen und/oder gesendeten E-Mails ausgebildeten Anwendungsprogramms, vorliegend beispielhaft Outlook. Die Datenbank 23 des Anwendungsprogramms umfasst neben Adressierungsinformationen (E-Mail-Adressen) Kontaktierungsinformationen (beispielsweise Namen, Kontaktdaten und dergleichen) von Kommunikationspartnern des Nutzers des Anwendungsprogramms. Die Kontaktierungsinformationen liegen dabei in dem beziehungsweise den von dem Anwendungsprogramm (Outlook) verwendeten oder genutzten Format beziehungsweise Formaten vor.

Die Datenbank 24 ist ebenfalls Bestandteil eines seitens des Rechners ausgeführten Anwendungsprogramms, vorliegend beispielhaft eine Webmail-Anwendung. Die Datenbank 24 des Anwendungsprogramms umfasst neben Adressierungsinformationen Kontaktierungsinformationen (beispielsweise Namen, Kontaktdaten und dergleichen) von Kommunikationspartnern des Nutzers des Anwendungsprogramms. Die Kontaktierungsinformationen liegen dabei in dem beziehungsweise den von dem Anwendungsprogramm verwendeten oder genutzten Format beziehungsweise Formaten vor.

Die Datenbank 25 ist seitens eines mobilen Endgerätes, vorliegend einem sogenannten PDA (PDA: Personal Digital Assistent) eingerichtet und umfasst insbesondere neben Adressierungsinformationen Kontaktierungsinformationen (beispielsweise Namen, Kontaktdaten und dergleichen) von Kommunikationspartnern des Nutzers des mobilen Endgerätes (PDA). Die Kontaktierungsinformationen liegen dabei in dem beziehungsweise den von seitens des PDAs genutzten Anwendungsprogrammen verwendeten oder genutzten Formaten vor.

Mittels seitens der erfindungsgemäßen Vorrichtung 19 zur Erzeugung des Adressbuchs 39 vorgesehenen Extrahierungseinrichtungen 27, 28, 29, 30 und 31 werden aus den Adressierungsinformationen aufweisenden Datenbanken 21, 22, 23, 24 und 25 Kontaktierungsinformationen extrahiert. Die so extrahierten Kontaktierungsinformationen werden dann von weiter seitens der erfindungsgemäßen Vorrichtung 19 zur Erzeugung des Adressbuchs 39 vorgesehenen Konvertierungseinrichtungen 33, 34, 35, 36 und 37 in Kontaktierungsinformationen eines einheitlichen Formats konvertiert. Das einheitliche Format ist dabei vorteilhafterweise von dem Nutzer der Vorrichtung 19 zur Erzeugung des Adressbuchs 39 vorgebbar beziehungsweise auswählbar.

Die Vorrichtung 19 zur Erzeugung des Adressbuchs 39 weist dabei weiter eine in Fig. 1 nicht explizit dargestellte Vergleichs- und/oder Zuordnungseinrichtung auf, welche die konvertierten Kontaktierungsinformationen entsprechend dem vorgegebenen beziehungsweise ausgewählten Format zu dem Adressbuch 39 zusammenstellt. Im Rahmen der Zusammenstellung können dabei mitunter entsprechend dem vorgegebenen beziehungsweise ausgewählten Format fehlende Kontaktierungsinformationen über eine Schnittstelle zu wenigstens einer über ein Kommunikationsnetzwerk zugänglichen öffentlichen Datenbank 26, welche Informationen von zu Kommunikationszwecken über wenigstens ein Kommunikationsnetzwerk erreichbare Kommunikationspartner aufweist, automatisch ergänzt beziehungsweise vervollständigt werden. Die Datenbank 26 ist vorliegend eine über ein Kommunikationsnetzwerk zugängliche Datenbank 26 und weist Informationen zu Kosten von genutzten Kommunikationsdiensten des Kommunikationsnetzwerks auf oder macht diese zugänglich. Die Informationen liegen dabei vorliegend in Form von Abrechnungsdaten in einem sogenannten CDR (CDR: Call Detail Record) der genutzten Kommunikationsdienste des Kommunikationsnetzwerks vor und umfassen insbesondere Adressierungsinformationen, in der Regel in Form von für Kommunikationsdienste genutzten MSISDNs oder dergleichen. Über eine Einrichtung 32 werden entsprechende aus den Datenbanken 21, 22, 23, 24 und 25 extrahierten und zu dem Adressbuch 39 konvertierten Kontaktierungsinformationen mit den Informationen aus der Datenbank verifiziert und/oder über eine Einrichtung 38 vervollständigt.

Die konvertierten Kontaktierungsinformationen des Adressbuchs 39 werden vorliegend - wie bereits erläutert - entsprechend dem vorgegebenen beziehungsweise ausgewählten Format seitens der Benutzerschnittstelle mit graphischer Benutzeroberfläche 8 seitens der in der Funktionsleiste 9 wiedergegebenen Schalt- und/oder Funktionsfläche 18, welche in Form eines Mittels eines Eingabemittels des Rechners auswählbares und/oder aktivierbares Feld ausgebildet ist, wiedergegeben. Bei Betätigung der Schalt- und/oder Funktionsfläche 18 beziehungsweise deren Felder oder Einträgen entsprechend dem Adressbuch 39 sind die entsprechenden Kontaktierungsinformationen für Kommunikationszwecke mit Kommunikationsdiensten wenigstens eines Kommunikationsnetzwerk nutzbar, ohne dass der Nutzer sich Gedanken über das jeweilige Format des Kommunikationsdienstes oder Kommunikationsnetzwerks machen muss, da dieses einheitlich von dem Adressbuch 39 angepasst beziehungsweise ergänzt wird.

Das in der Figur der Zeichnung dargestellte Ausführungsbeispiel und die im Zusammenhang mit diesen beispielhaften Anwendungsformen dienen lediglich der Erläuterung der Erfindung und sind für diese nicht beschränkend.

### Bezugszeichenliste:

- 1: graphische Benutzeroberfläche (Benutzerschnittstelle (Betriebssystem))
- 2: Funktionsleiste (graphische Benutzeroberfläche (1))
- 3: Schaltfläche (Funktionsleiste (2))
- 4: Schalt- und/oder Funktionsfläche (Funktionsleiste (2))
- 5: Schalt- und/oder Funktionsfläche (Funktionsleiste (2))
- 6: Schaltfläche (Funktionsleiste (2))
- 7: Schalt- und/oder Funktionsfläche (Funktionsleiste (2))
- 8: graphische Benutzeroberfläche/GUI (Benutzerschnittstelle/Browser)
- 9: Funktionsleiste (graphische Benutzeroberfläche (8))
- 10: Schaltfläche (Funktionsleiste (9))
- 11: Funktionsfläche (Funktionsleiste (9))
- 12: Eingabefläche für Adressierungsinformationen (Funktionsleiste (9))
- 13: Schaltfläche (Funktionsleiste (9))
- 14: Schalt- und/oder Funktionsfläche (Funktionsleiste (9))
- 15: Schaltfläche (Funktionsleiste (9))
- 16: Schalt- und/oder Funktionsfläche (Funktionsleiste (9))
- 17: Anzeigebereich (graphische Benutzeroberfläche (8))
- 18: Schalt- und/oder Funktionsfläche (Funktionsleiste (9))
- 19: Vorrichtung zur Erzeugung eines Adressbuchs (39)
- 20: Schnittstelle (Vorrichtung (19) ⇔ graphische Benutzeroberfläche (8))
- 21: Datenbank (Vorrichtung (19))/Anwendungsprogramm/Instant Messenger
- 22: Datenbank (Vorrichtung (19))/mobiles Endgerät/USIM/SIM
- 23: Datenbank (Vorrichtung (19))/Anwendungsprogramm/Outlook
- 24: Datenbank (Vorrichtung (19))/Anwendungsprogramm/Webmail
- 25: Datenbank (Vorrichtung (19))/Terminplaner/PDA
- 26: Datenbank (Vorrichtung (19))/Abrechnungsdaten/CDR
- 27: Extrahiereinrichtung (Kontaktierungsinformationen aus Datenbank (21))
- 28: Extrahiereinrichtung (Kontaktierungsinformationen aus Datenbank (22))
- 29: Extrahiereinrichtung (Kontaktierungsinformationen aus Datenbank (23))
- 30: Extrahiereinrichtung (Kontaktierungsinformationen aus Datenbank (24))
- 31: Extrahiereinrichtung (Kontaktierungsinformationen aus Datenbank (25))
- 32: Verifiziereinrichtung (Kontaktierungsinformationen)
- 33: Konvertiereinrichtung (extrahierte Kontaktierungsinformationen (Extrahiereinrichtung (27))
- 34: Konvertiereinrichtung (extrahierte Kontaktierungsinformationen (Extrahiereinrichtung (28))
- 35: Konvertiereinrichtung (extrahierte Kontaktierungsinformationen (Extrahiereinrichtung (29))
- 36: Konvertiereinrichtung (extrahierte Kontaktierungsinformationen (Extrahiereinrichtung (30))
- 37: Konvertiereinrichtung (extrahierte Kontaktierungsinformationen (Extrahiereinrichtung (31))
- 38: Vervollständigungseinrichtung (Kontaktierungsinformationen)
- 39: Adressbuch (konvertierte Kontaktierungsinformationen (Konvertiereinrichtung (27, 28, 29, 30, 31, 32)

## Patentansprüche

1. Vorrichtung (19) zur Erzeugung eines zumindest Informationen zur Kontaktierung von zu Kommunikationszwecken über wenigstens ein Kommunikationsnetzwerk erreichbaren Kommunikationspartnern aufweisenden Adressbuchs (39),
mit
einer Schnittstelle zu wenigstens einer
wenigstens einen Kommunikationsdienst eines Kommunikationsnetzwerks anbietenden und
eine zur Nutzung des wenigstens einen Kommunikationsdienstes des Kommunikationsnetzwerks geeignete Datenbank (21, 22, 23, 24, 25) mit Adressierungsinformationen wenigstens eines Kommunikationspartners aufweisenden
Kommunikationseinrichtung,
einer Einrichtung (27, 28, 29, 30, 31) zum Extrahieren von Kontaktierungsinformationen aus der Adressierungsinformationen aufweisenden Datenbank,
einer Einrichtung (33, 34, 35, 36, 37) zum Konvertieren von extrahierten Kontaktierungsinformationen in Kontaktierungsinformationen eines einheitlich vorgebbaren Formats,
einer Vergleichs- und/oder Zuordnungseinrichtung zum Zusammenstellen von konvertierten Kontaktierungsinformationen zu einem Adressbuch (39),
einer Schnittstelle zu wenigstens einer
über ein Kommunikationsnetzwerk zugänglichen,
Informationen von zu Kommunikationszwecken über wenigstens ein Kommunikationsnetzwerk erreichbaren Kommunikationspartnern aufweisenden
Datenbank (26)
über wenigstens eine Kommunikationseinrichtung zur Nutzung wenigstens eines Kommunikationsdienstes eines Kommunikationsnetzwerks
und
einer Einrichtung (32, 38) zum Verifizieren und/oder Vervollständigen von Kontaktierungsinformationen des Adressbuchs (39) durch wenigstens einen Vergleich mit Informationen der über ein Kommunikationsnetzwerk zugänglichen Datenbank (26).

2. Vorrichtung nach Anspruch 1, **dadurch gekennzeichnet, dass** die Zusammenstellung von konvertierten Kontaktierungsinformationen zu einem Adressbuch (39) nach vorzugsweise vorgebbaren übereinstimmenden Merkmalen erfolgt.

3. Vorrichtung nach Anspruch 1 oder Anspruch 2, **gekennzeichnet durch** eine Einrichtung (27, 28, 29, 30, 31, 33, 34, 35, 36, 37) zur automatischen Extrahierung und/oder Konvertierung von Kontaktierungsinformationen aus von und/oder mittels der wenigstens einen Kommunikationseinrichtung für Kommunikationsdienste eines Kommunikationsnetzwerks genutzten Adressierungsinformationen von Kommunikationspartnern.

4. Vorrichtung nach Anspruch 3, **gekennzeichnet durch** E-Mail-Adressen, Internetadressen (URL), Rufnummern (ISDN) und/oder Mobilfunknetzrufnummern (MSISDN) als Adressierungsinformationen von Kommunikationspartnern.

5. Vorrichtung nach einem der Ansprüche 1 bis 4 **dadurch gekennzeichnet, dass** die über ein Kommunikationsnetzwerk zugängliche Datenbank (26) Informationen zu Kosten von genutzten Kommunikationsdiensten des Kommunikationsnetzwerks aufweist oder zugänglich macht, wobei die Informationen vorzugsweise in Form von Abrechnungsdaten (CDR) der genutzten Kommunikationsdienste des Kommunikationsnetzwerks vorliegen.

6. Vorrichtung nach einem der Ansprüche 1 bis 5, **gekennzeichnet durch** eine Einrichtung (27, 28, 29, 30, 31, 33, 34, 35, 36, 37) zur automatischen Erfassung und/oder Extrahierung von Kontaktierungsinformationen aus mittels der wenigstens einen Kommunikationseinrichtung für Kommunikationsdienste eines Kommunikationsnetzwerks genutzten und/oder erfassten Adressierungsinformationen von Kommunikationspartnern in Abhängigkeit von vorgebbaren Ereignissen und/oder Inhalten.

7. Vorrichtung nach einem der Ansprüche 1 bis 6, **gekennzeichnet durch** eine Einrichtung zur Speicherung des Adressbuchs (39) seitens wenigstens einer Datenbank.

8. Vorrichtung nach einem der Ansprüche 1 bis 7, **gekennzeichnet durch** eine Einrichtung zur Sortierung und/oder Gewichtung von Kontaktierungsinformationen des Adressbuchs, vorzugsweise in Abhängigkeit von nutzerindividuellen Vorgaben, nutzerindividuellen Auswertungen, Ereignissen und/oder Inhalten.

9. Vorrichtung nach einem der Ansprüche 1 bis 8, **gekennzeichnet durch** einen Betrieb mit und/oder im Zusammenhang mit einer Benutzerschnittstelle (Browser, 8) mit graphischer Benutzeroberfläche (GUI) zum Aufrufen, Darstellen und/oder Verwalten von Dateien.

10. Vorrichtung nach einem der Ansprüche 1 bis 9, **gekennzeichnet durch** einen Betrieb seitens eines Rechners, welcher wenigstens eine Kommunikationseinrichtung zum Zugriff auf ein Kommunikationsdienste bereitstellendes Kommunikationsnetzwerk aufweist.

11. Vorrichtung nach einem der Ansprüche 1 bis 10, **gekennzeichnet durch** einen Betrieb seitens eines in einem Mobilfunknetz betreibbaren mobilen Endgerätes (22).
